(19) Europäisches Patentamt
European Patent Office
Office européen des brevets

(11) **EP 4 053 747 A1**

(12) **EUROPEAN PATENT APPLICATION**
published in accordance with Art. 153(4) EPC

(43) Date of publication:
**07.09.2022 Bulletin 2022/36**

(51) International Patent Classification (IPC):
***G06N 3/04*** (2006.01)

(21) Application number: **20883646.0**

(52) Cooperative Patent Classification (CPC):
**G06N 3/0454; G06N 3/08**

(22) Date of filing: **29.10.2020**

(86) International application number:
**PCT/JP2020/040591**

(87) International publication number:
**WO 2021/085523 (06.05.2021 Gazette 2021/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.10.2019 US 201962928760 P**

(71) Applicant: **Panasonic Intellectual Property
Management Co., Ltd.
Osaka-shi, Osaka 540-6207 (JP)**

(72) Inventors:
• **MURUGAN, Pushparaja
02-11 Singapore 469332 (SG)**

• **LIU, Jin
02-11 Singapore 469332 (SG)**
• **SUBRAMANIAN, Karthikk
02-11 Singapore 469332 (SG)**
• **LIM, Sugiri Pranata
02-11 Singapore 469332 (SG)**
• **UEDA, Isao
1-61, Shiromi 2-chome, Chuo-ku,
Osaka-shi, Osaka 540-6207 (JP)**

(74) Representative: **Vigand, Philippe et al
Novagraaf International SA
Chemin de l'Echo 3
1213 Onex - Genève (CH)**

(54) **NEURAL NETWORK, CALCULATING METHOD, AND PROGRAM**

(57) A neural network according to the present disclosure incudes: an input layer (10) to which input information is input; a plurality of blocks (111) to be used to extract a feature volume from the input information; and an output layer (12) from which the feature volume extracted is output. Each of the plurality of blocks (111) includes: a residual block formed by combining one or more first convolutional layers and a skip connection which is a connection that bypasses the one or more first convolutional layers; and a connection block which includes at least a second convolutional layer and equalizes output of the one or more first convolutional layers and output of the skip connection.

FIG. 3

**Description**

[Technical Field]

The present disclosure relates to neural networks, computation methods, and programs.

[Background Art]

In recent years, deep learning (DL) models using convolutional neural networks (CNNs) have been demonstrating outstanding performance in many visual tasks such as image classification, object detection, and object recognition.

Meanwhile, it is also known that increasing the depth of the layers of a DL model improves performance thereof. However, there is the problem of vanishing or exploding gradients in a DL model with layers simply increased in depth.

Regarding this problem, for example, a CNN model called a residual network (ResNet) incorporating residual learning has been proposed (for example, refer to Non Patent Literature (NPL) 1). ResNet solves the aforementioned problem by learning a residual obtained by subtracting input x from output H(x): F(x) = H(x) - x, thereby providing a network architecture with a depth of 152 layers. Furthermore, ResNet disclosed in NPL 1 has a network architecture by stacking residual blocks each formed by combining a convolutional layer and a skip connection which bypasses input to one layer to feed the input to the next layer located deeper than said one layer. Note that there are also cases where the skip connection used in ResNet is referred to as a local residual skip connection.

[Citation List]

[Non Patent Literature]

[NPL 1] He, K., Zhang, X., Ren, S. and Sun, J., 2016. Deep residual learning for image recognition. In Proceedings of the IEEE conference on computer vision and pattern recognition (pp. 770-778).

[Summary of Invention]

[Technical Problem]

However, a model (network model) having the network architecture of ResNet disclosed in NPL 1 includes layers at a significant depth and requires enormous amounts of parameters and computation cost (floating point operations per second: FLOPs). Furthermore, hardware platforms exemplified by mobile devices such as smartphones and tablets, home appliances such as televisions, and industrial equipment are resource-limited, meaning that there are limits to the computational cost and the model size that can be applied. Thus, it is difficult to provide and use ResNet disclosed in NPL 1 in a resource-limited hardware platform such as a mobile device.

The present disclosure is conceived in view of the above-described circumstances and has as an object to provide a neural network, a computation method, and a program in which the model size and the computational cost are further reduced while the accuracy is maintained.

[Solution to Problem]

In order to solve the aforementioned problems, a neural network according to one aspect of the present disclosure includes: an input layer to which input information is input; a plurality of blocks to be used to extract a feature volume from the input information; and an output layer from which the feature volume extracted is output. Each of the plurality of blocks includes: a residual block formed by combining one or more first convolutional layers and a skip connection which is a connection that bypasses the one or more first convolutional layers; and a connection block which includes at least a second convolutional layer and equalizes output of the one or more first convolutional layers and output of the skip connection.

Note that the aforementioned general or specific aspects may be implemented using a system, a method, an integrated circuit, a computer program, or a computer-readable recording medium such as a compact disc read-only memory (CD-ROM), or any combination of systems, methods, integrated circuits, computer programs, and recording media.

[Advantageous Effects of Invention]

According to the present disclosure, it is possible to provide a neural network, etc., in which the model size and the computational cost are further reduced while the accuracy is maintained.

[Brief Description of Drawings]

[FIG. 1]

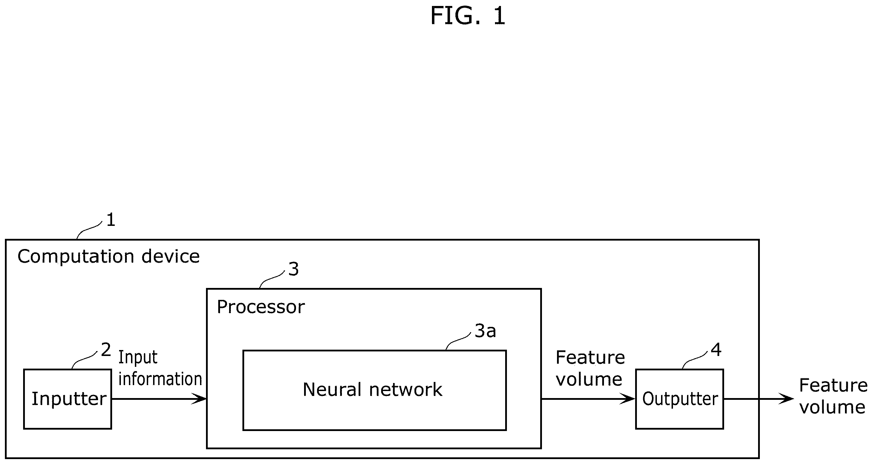

FIG. 1 is a block diagram illustrating one example of the configuration of a computation device according to an embodiment.
[FIG. 2]

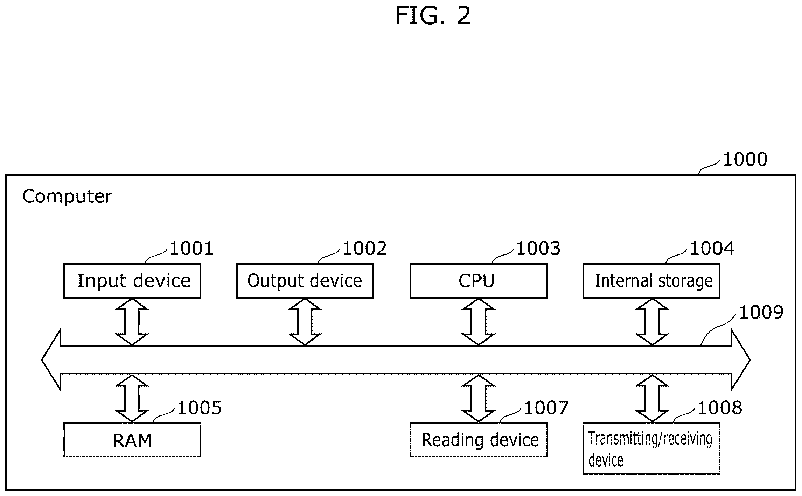

FIG. 2 is a diagram illustrating one example of the hardware configuration of a computer that implements, using software, the functions of a computation device according to an embodiment.
[FIG. 3]

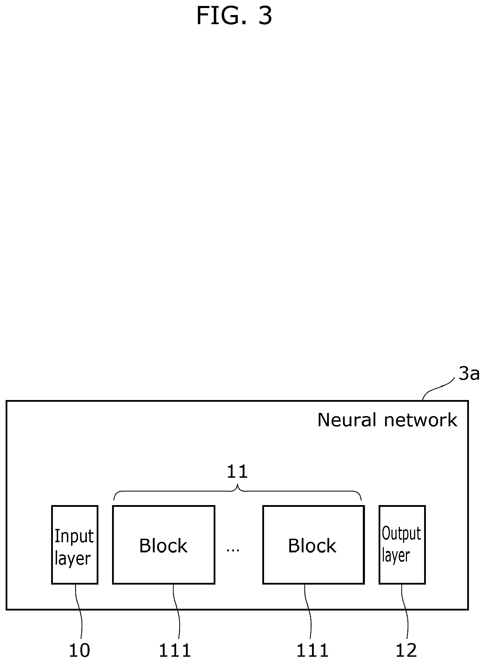

FIG. 3 is a diagram illustrating the configuration of a neural network according to an embodiment.
[FIG. 4A]

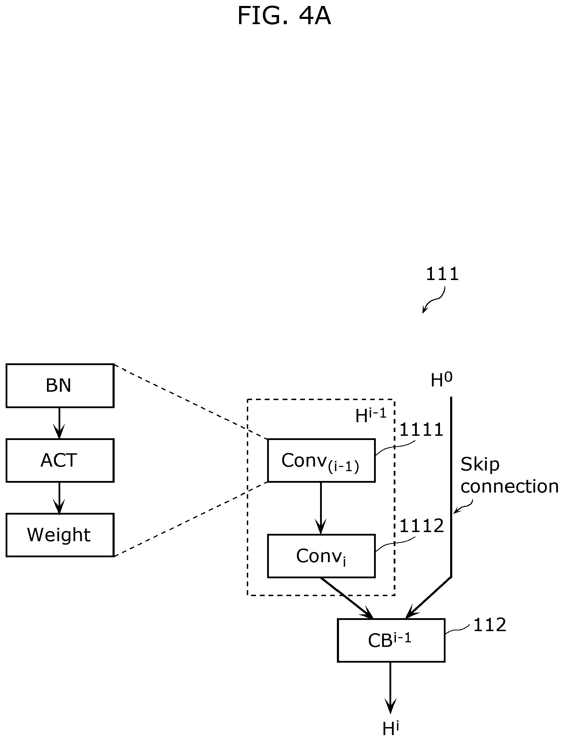

FIG. 4A is a conceptual diagram for describing the network architecture of a block illustrated in FIG. 3.
[FIG. 4B]

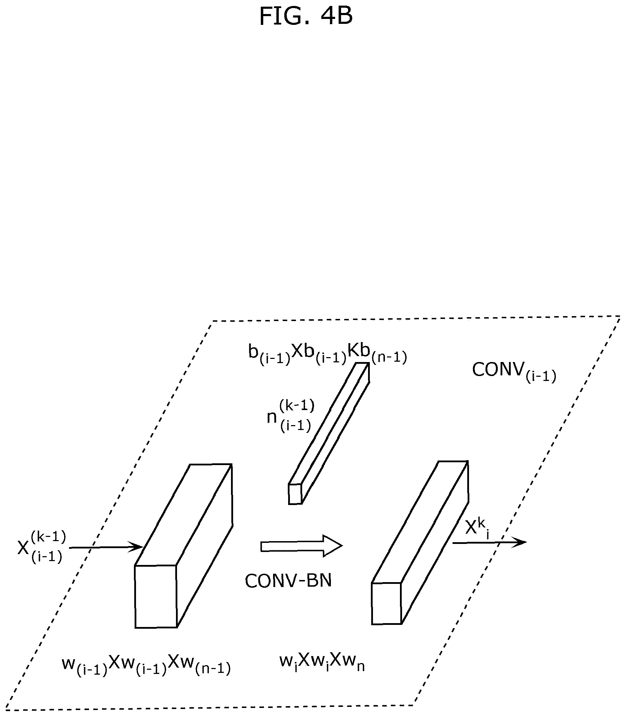

FIG. 4B is a diagram conceptually illustrating computation performed in a convolutional layer illustrated in FIG. 4A.
[FIG. 4C]

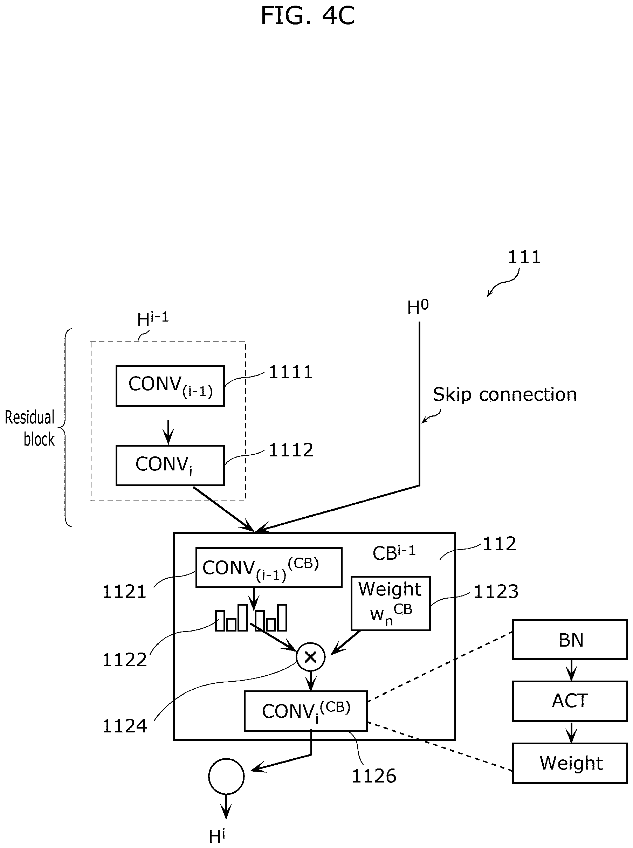

FIG. 4C is a diagram conceptually illustrating a specific configuration of a connection block illustrated in FIG. 4A.
[FIG. 5]

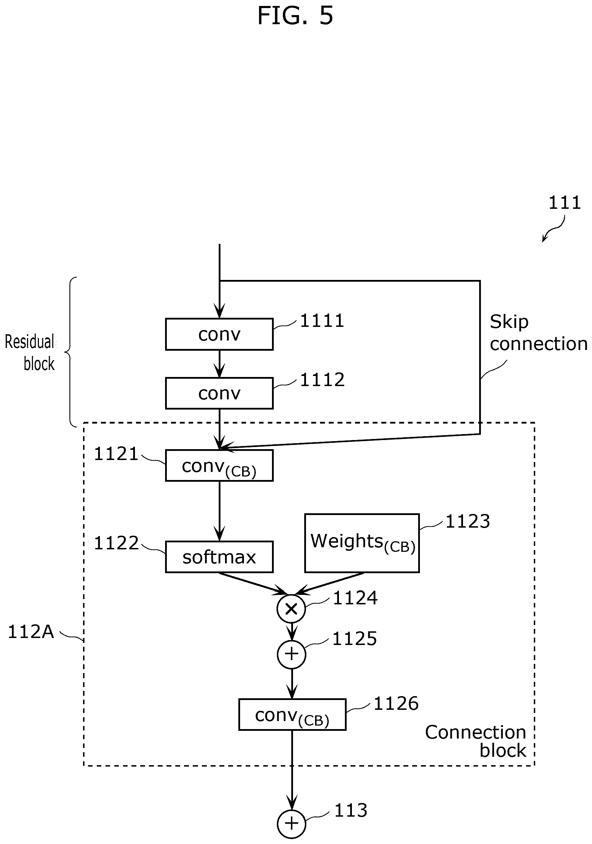

FIG. 5 is a diagram illustrating one specific embodiment of the network architecture of the block illustrated in FIG. 4A.
[FIG. 6]

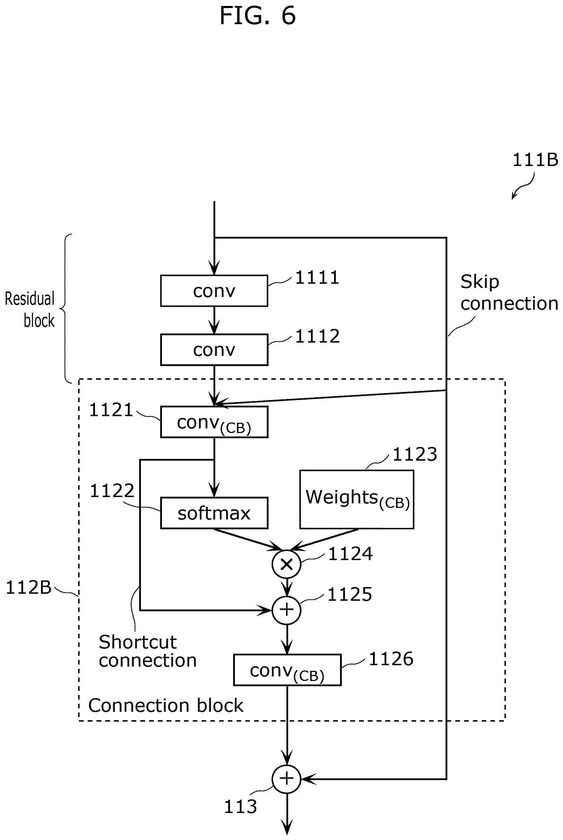

FIG. 6 is a diagram illustrating another specific embodiment of the network architecture of the block illustrated in FIG. 4A.
[FIG. 7]

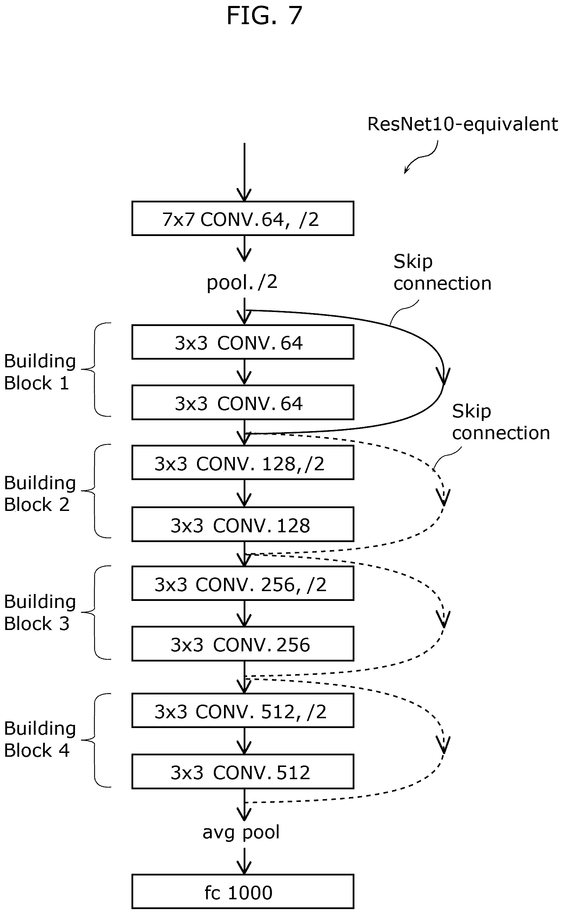

FIG. 7 is a diagram conceptually illustrating an implementation example of a ResNet10-equivalent network architecture.
[FIG. 8]

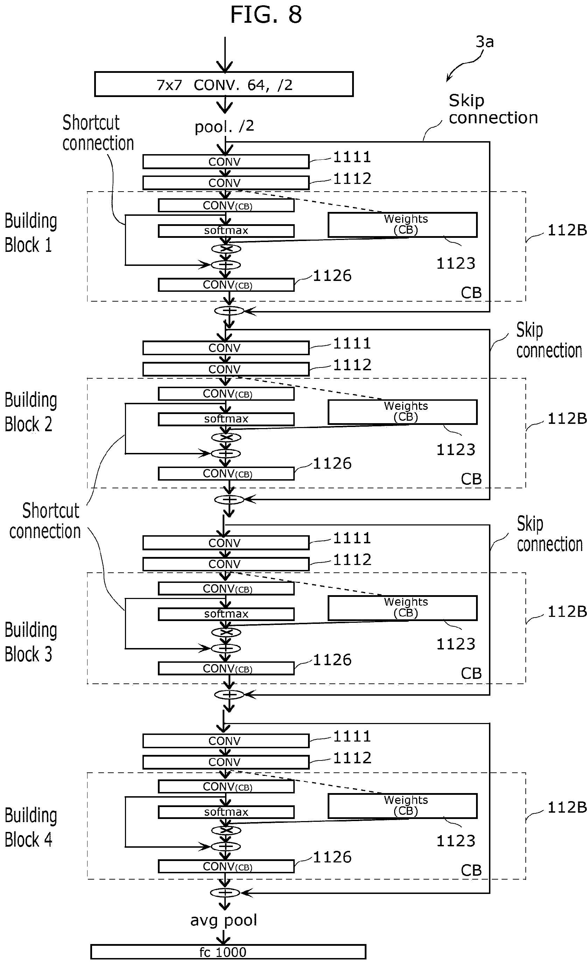

FIG. 8 is a diagram conceptually illustrating an implementation example of a neural network according to an embodiment.
[FIG. 9A]

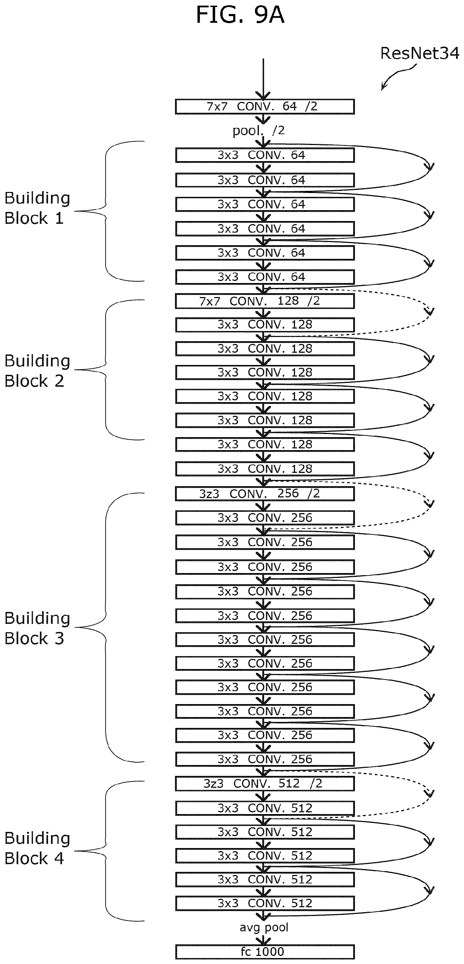

FIG. 9A is a diagram conceptually illustrating an implementation example of a ResNet34 network architecture.
[FIG. 9B]

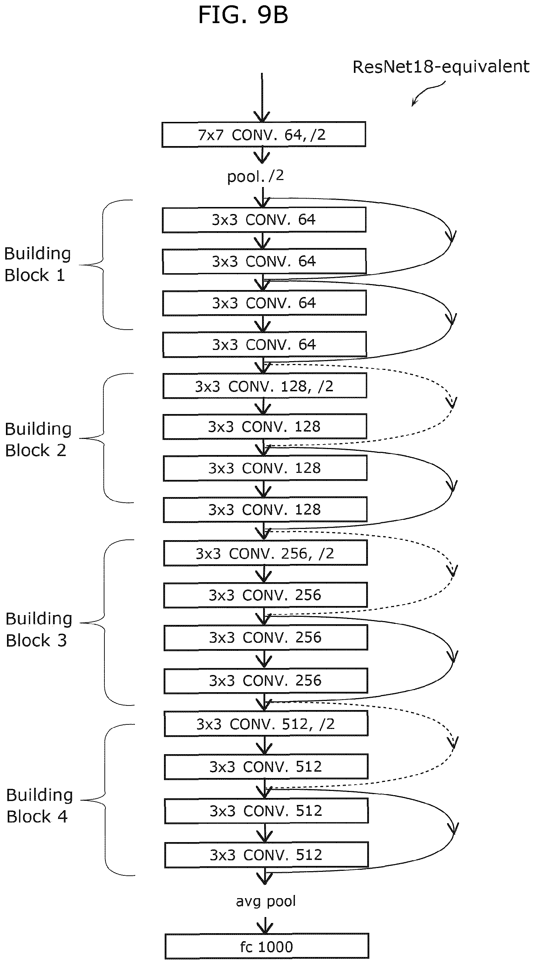

FIG. 9B is a diagram conceptually illustrating an implementation example of a ResNetl8-equivalent network architecture.
[FIG. 10]

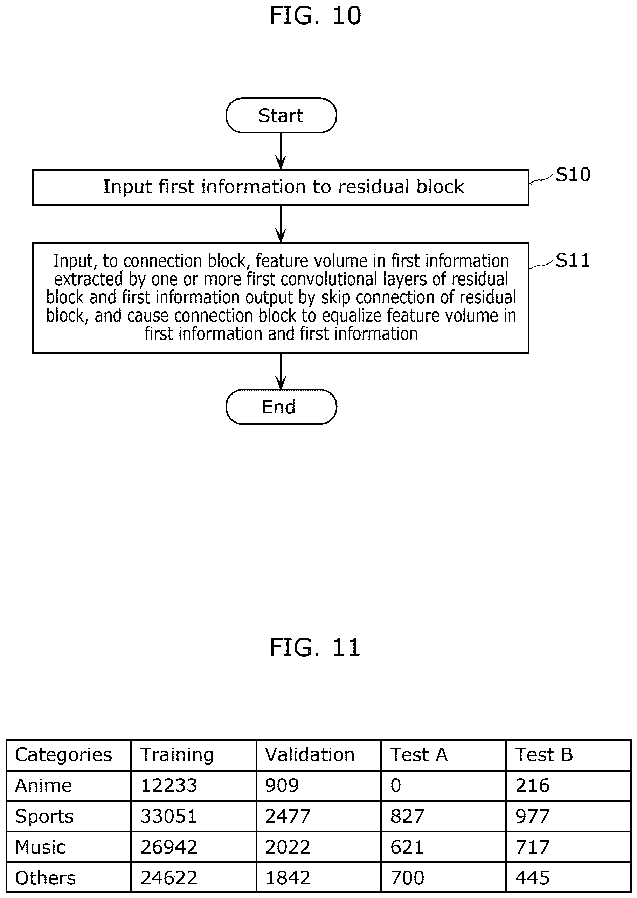

FIG. 10 is a flowchart illustrating the overview of operations of a computation device according to an embodiment.
[FIG. 11]
FIG. 11 is a diagram illustrating the overview of a database according to an example.
[FIG. 12]

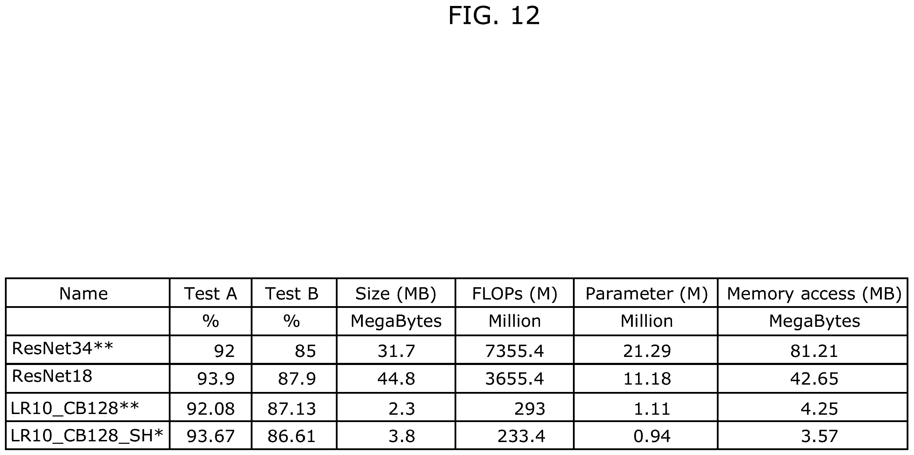

FIG. 12 is a diagram illustrating the result of an experiment according to an example.

[Description of Embodiments]

A neural network according to one aspect of the present disclosure includes: an input layer to which input information is input; a plurality of blocks to be used to extract a feature volume from the input information; and an output layer from which the feature volume extracted is output. Each of the plurality of blocks includes: a residual block formed by combining one or more first convolutional layers and a skip connection which is a connection that bypasses the one or more first convolutional layers; and a connection block which includes at least a second convolutional layer and equalizes output of the one or more first convolutional layers and output of the skip connection.
With this configuration, it is possible to provide a neural network in which the model size and the computational cost are further reduced while the accuracy is maintained.
Here, for example, the connection block may include: a second convolutional layer to which the output of the one or more first convolutional layers and the output of the skip connection are input; a first output layer to which output of the second convolutional layer is input; a weighting layer which adds a weight stored in advance to output of the first output layer; and a third convolutional layer to which output of the weighting layer is input.

With this configuration, the required number of blocks for maintaining the accuracy can be reduced, and thus it is possible to reduce the model size and the computational cost.

Furthermore, for example, each of the plurality of blocks may further output the output of the skip connection in addition to output of the connection block, and the connection block may include: a second convolutional layer to which the output of the one or more first convolutional layers and the output of the skip connection are input; a first output layer to which output of the second convolutional layer is input; a weighting layer which adds a weight stored in advance to output of the first output layer; a shortcut connection which skips the first output layer and the weighting layer; and a third convolutional layer to which output of the weighting layer and output of the shortcut connection are input.

With this configuration, the required number of blocks for maintaining the accuracy can be reduced, and moreover the shortcut connection makes it possible to avoid gradient explosion at the output of the connection block; thus, it is possible to further reduce the model size and the computational cost while maintaining the accuracy.

Here, for example, the first output layer outputs a value obtained by applying a softmax function to the output of the second convolutional layer input to the first output layer.

Furthermore, a computation method according to one aspect of the present disclosure is a method for computing a plurality of blocks that are included in a neural network and used to extract a feature volume from input information, the neural network including an input layer to which the input information is input, the plurality of blocks, and an output layer from which the feature volume extracted is output. The method includes: inputting first information to a residual block included in the plurality of blocks and formed by combining one or more first convolutional layers and a skip connection which is a connection that bypasses the one or more first convolutional layers; and inputting a feature volume extracted from the first information by the one or more first convolutional layers and the first information output by the skip connection to a connection block included in the plurality of blocks and including at least a second convolutional layer, to equalize the feature volume in the first information and the first information.

Each embodiment described below shows a specific example of the present disclosure. Thus, the numerical values, shapes, materials, structural elements, the arrangement and connection of the structural elements, etc., shown in the following embodiment are mere examples, and are not intended to limit the present disclosure. Among the structural elements in the following embodiment, structural elements not recited in any one of the independent claims which indicates a form of implementation according to one embodiment of the present disclosure will be described as arbitrary structural elements. The form of implementation of the present disclosure is not limited to the original independent claims and may be expressed by other independent claims.

[Embodiment]

Hereinafter, an embodiment will be described with reference to the drawings.

[1. Computation Device 1]

FIG. 1 is a block diagram illustrating one example of the configuration of computation device 1 according to an embodiment.

Computation device 1, which is a computer or the like using trained neural networks (NN), includes inputter 2, processor 3, and outputter 4, as illustrated in FIG. 1. When input information is input, computation device 1 outputs, as a computation result, a feature volume extracted from the input information. Note that the input information is, for example, information to be used for visual tasks such as an image and video.

Inputter 2 obtains the input information and inputs the obtained input information to processor 3. In the present embodiment, inputter 2 inputs the obtained input information to processor 3.

Processor 3 extracts a feature volume from the input information using a neural network according to the present embodiment. In the present embodiment, processor 3 extracts a feature volume from the input information using trained neural network 3a. Trained neural network 3a is stored in a storage (not illustrated in the drawings) included in processor 3. Note that trained neural network 3a may be stored in a cloud and may be used by processor 3 via a communication network such as the Internet. The configuration of neural network 3a will be described later.

Outputter 4 outputs, as a computation result, the feature volume extracted by processor 3.

[1-1. Hardware Configuration]

FIG. 2 is a diagram illustrating one example of the hardware configuration of computer 1000 that implements, using software, the functions of computation device 1 according to the present embodiment.

Computer 1000 includes input device 1001, output device 1002, central processing unit (CPU) 1003, internal storage 1004, random-access memory (RAM) 1005, reading device 1007, a transmitting/receiving device 1008, and bus 1009, as illustrated in FIG. 2. Input device 1001, output device 1002, CPU 1003, internal storage 1004, RAM 1005, reading device 1007, and transmitting/receiving device 1008 are connected using bus 1009.

Input device 1001, which serves as a user interface such as an input button, a touch pad, and a touch panel display, receives user input. Note that input device 1001 may be configured to not only receive user input, but also receive voice control and a remote operation using a remote control or the like.

Internal storage 1004 is a flash memory or the like. At least one of a program for implementing the functions of computation device 1 and an application in which the functional configuration of computation device 1 is used may be stored in internal storage 1004 in advance. Furthermore, trained neural network 3a may be stored in internal storage 1004.

RAM 1005, which is a random-access memory, is used to store data, etc., at the time of execution of the program or the application.

Reading device 1007 reads information from a recording medium such as a universal serial bus (USB) flash drive. Reading device 1007 reads the aforementioned program, neural network 3a, application, etc., from a recording medium on which said program, application, etc., are recorded, and stores the read program, neural network 3a, application, etc., into internal storage 1004.

Transmitting/receiving device 1008 is a communication circuit for performing wired or wireless communication. For example, transmitting/receiving device 1008 may communicate with a server device connected to a network, download the aforementioned program, neural network 3a, application, etc., from the server device, and store the read program, neural network 3a, application, etc., into internal storage 1004.

CPU 1003, which is a central processing unit, copies the program, application, etc., stored in internal storage 1004 onto RAM 1005, sequentially reads commands included in said program, application, etc., from RAM 1005, and executes the read commands.

[1-2. Neural Network 3a]

FIG. 3 is a diagram illustrating the configuration of neural network 3a according to the present embodiment.

Neural network 3a according to the present embodiment includes: input layer 10 to which the input information is input; middle layer 11 made up of a plurality of blocks 111 to be used to extract a feature volume from the input information; and output layer 12 from which the extracted feature volume is output, as illustrated in FIG. 3. In the following description, there are cases where neural network 3a according to the present embodiment is referred to as LVNet. Hereinafter, a model having the network architecture of block 111 will be described.

[1-2-1. Block 111]

FIG. 4A is a conceptual diagram for describing the network architecture of block 111 illustrated in FIG. 3.

Blocks 111 are stacked to constitute neural network 3a. As illustrated in FIG. 4A, block 111 includes connection block 112, a fundamental unit layer denoted as $H^{i-1}$, and a skip connection. Note that block 111 is also referred to as a building block in ResNet.

The fundamental unit layer includes one or more first convolutional layers. In the example illustrated in FIG. 4A, the fundamental unit layer denoted as $H^{i-1}$ includes convolutional layer 1111 denoted as $\mathrm{Conv}_{(i-1)}$ and convolutional layer 1112 denoted as $\mathrm{Conv}_i$. At the time of implementation, convolutional layer 1111 and convolutional layer 1112 include a layer for batch normalization (BN in the figure), an activation function (ACT in the figure) such as relu, and a convolutional layer (Weight in the figure), as illustrated in FIG. 4A. Note that the order of computation is not limited to the order illustrated in FIG. 4A.

The skip connection skips the fundamental unit layer denoted as $H^{i-1}$ and feeds input denoted as $H^\circ$ to connection block 112.

Connection block 112, which is denoted as $CB^{i-1}$ in FIG. 4A, equalizes output of the fundamental unit layer denoted as $H^{i-1}$ and output of the skip connection.

Note that the fundamental unit layer denoted as $H^{i-1}$ and the skip connection constitute a residual block.

FIG. 4B is a diagram conceptually illustrating computation performed in the convolutional layer illustrated in FIG. 4A. In FIG. 4B, the computation performed in $\mathrm{Conv}_{(i-1)}$ of the fundamental unit layer denoted as $H^{i-1}$ is schematically illustrated as one example.

As illustrated in FIG. 4B, an input feature that is input to $\mathrm{Conv}_{(i-1)}$ is a tensor expressed as follows.

[Math. 1]

$$x^{(k-1)}_{(i-1)}$$

The dimension of the input feature is expressed as follows.

[Math. 2]

$$w_{(i-1)} X w_{(i-1)} X w_{(n-1)}$$

The kernel size of a kernel for convolution is expressed as follows.

[Math. 3]

$$b_{(i-1)} X b_{(i-1)} X b_n$$

A feature map obtained by convolution computation in which the kernel is used is expressed as follows.

[Math. 4]

$$x^k_i$$

This feature map becomes an input feature for Conv(i), and the dimension there of is expressed as follows.

[Math. 5]

$$w_i X w_i X w_n$$

FIG. 4C is a diagram conceptually illustrating one example of the configuration of connection block 112 illustrated in FIG. 4A.

Connection block 112 includes $\text{Conv}_{(i-1)}^{(CB)}$, a softmax function, Weights $W_n^{CB}$, $\text{Conv}_{(i)}^{(CB)}$, etc., as illustrated in FIG. 4C.

[1-2-2. Specific Embodiment of Network Architecture of Block 111]

Hereinafter, with reference to FIG. 5, a specific embodiment of the network architecture of block 111 illustrated in FIG. 4A will be described.

FIG. 5 is a diagram illustrating one specific embodiment of the network architecture of block 111 illustrated in FIG. 4A.

Block 111 illustrated in FIG. 5 includes a residual block, connection block 112A, and adder 113. Note that block 111 is not required to include adder 113.

The residual block is formed by combining one or more first convolutional layers and a skip connection which is a connection that bypasses the one or more first convolutional layers. In the example illustrated in FIG. 5, the residual block is formed by combining convolutional layer 1111, convolutional layer 1112, and a skip connection which is a connection that bypasses convolutional layer 1111 and convolutional layer 1112. Note that convolutional layer 1111 and convolutional layer 1112 constitute the fundamental unit layer described with reference to FIG. 4A and FIG. 4C.

Connection block 112A includes at least a second convolutional layer and equalizes the output of the one or more first convolutional layers and the output of the skip connection. In the example illustrated in FIG. 5, connection block 112A includes convolutional layer 1121, output layer 1122, weight 1123, weighting layer 1124, adder 1125, and convolutional layer 1121. Note that in the example illustrated in FIG. 5, since adder 1125 is not placed into operation, connection block 112A is not required to adder 1125.

Convolutional layer 1121, which is one example of the second convolutional layer, receives the output of the one or more first convolutional layers and the output of the skip connection. Convolutional layer 1121 performs a convolution on the received output of the one or more first convolutional layers and the received output of the skip connection, and outputs the result. In the present embodiment, convolutional layer 1121, which is expressed as $Conv_{(CB)}$ in FIG. 5, for example, receives the output of convolutional layer 1112 and the output of the skip connection. Convolutional layer 1121 outputs, to output layer 1122, a feature map obtained by performing a convolution on the received output of convolutional layer 1112 and the received output of the skip connection. Note that convolutional layer 1121, which is expressed as $CONV_{(i-1)}^{(CB)}$ in FIG. 4C, for example, receives a stack of the output of the fundamental unit layer that is denoted as $H^{i-1}$ and the output of the skip connection that is the input denoted as $H°$.

Output layer 1122, which is one example of the first output layer, receives the output of the second convolutional layer. More specifically, output layer 1122 outputs a value obtained by applying the softmax function to the received output of the second convolutional layer. In the present embodiment, output layer 1122 determines the probability of occurrence of the output from the feature map output from convolutional layer 1112, using the softmax function, and outputs the probability of occurrence of the output to weighting layer 1124, for example. Output layer 1122 is expressed as Softmax in FIG. 5, for example, and is expressed as a graph showing the probability of occurrence obtained using the softmax function in FIG. 4C, for example.

In weight 1123, a weight (a set of weights) is stored in advance. The weight stored in weight 1123 can be obtained through training of connection block 112A using training data. Weight 1123 is expressed as $Weights_{(CB)}$ in FIG. 5, for example, and is expressed as Weight $W_n^{CB}$ in FIG. 4C, for example.

Weighting layer 1124 adds the weight stored in advance to the output of output layer 1122. In the present embodiment, weighting layer 1124 adds the weight by multiplying the weight stored in weight 1123 in advance with the output of output layer 1122. Thus, since dispersed weighting can be performed on the output of the residual block, it is possible to improve non-linearity of the input and output of the residual block.

Convolutional layer 1126, which is one example of the third convolutional layer, receives the output of weighting layer 1124. In the present embodiment, convolutional layer 1126 outputs a feature map obtained by performing the convolution on the output of weighting layer 1124. By performing the convolution on the output of weighting layer 1124, convolutional layer 1126 can perform down-sampling on the output of weighting layer 1124. Note that convolutional layer 1126 is expressed as $CONV_i^{(CB)}$ in FIG. 4C, for example.

FIG. 6 is a diagram illustrating another specific embodiment of the network architecture of block 111 illustrated in FIG. 4A. Elements that are substantially the same as those in FIG. 4A, FIG. 4C, FIG. 5, etc., share the same reference signs, and detailed description will be omitted.

Block 111B illustrated in FIG. 6 differs from block 111 illustrated in FIG. 5 in that connection block 112B has a different configuration and the skip connection is connected to more points. The following description will focus on the differences.

Block 111B further outputs the output of the skip connection in addition to the output of connection block 112B. More specifically, in block 111B, the skip connection is not only connected to convolutional layer 1121 in connection block 112B by bypassing convolutional layer 1111 and convolutional layer 1112, but also is connected to adder 113, which is the output destination for connection block 112B, by bypassing connection block 112B. This allows the input to the skip connection to be output to next block 111B after block 111B in addition to convolutional layer 1121 in connection block 112. Thus, block 111B also has the functions of the residual block, meaning that it is possible to further improve the accuracy because the non-linearity of the input and output of block 111 can be improved and loss of gradient can be avoided.

Compared to connection block 112A illustrated in FIG. 5, connection block 112B further includes a shortcut connection. As with connection block 112A, connection block 112B includes at least the second convolutional layer and equalizes the output of the one or more first convolutional layers and the output of the skip connection.

The shortcut connection skips the first output layer and the weighting layer. In the present embodiment, the shortcut connection skips output layer 1122 and weighting layer 1124 and connects the output of convolutional layer 1121 and adder 1125.

Adder 1125 adds the output of weighting layer 1124 and the output of convolutional layer 1121 that has been output via the shortcut connection. Thus, even in the case where gradient explosion occurs due to instability resulting from the output of convolutional layer 1121 being forced to become non-linear due to weighting layer 1124 and output to convolutional layer 1126 without changes, the gradient explosion can be avoided.

Convolutional layer 1126, which is one example of the third convolutional layer, receives the output of weighting layer 1124 and the output of the shortcut connection. In the present embodiment, convolutional layer 1126 outputs a feature map obtained by performing the convolution on the output of adder 1125. By performing the convolution on the output of adder 1125, convolutional layer 1126 can perform down-sampling on the output of adder 1125.

[1-3. Implementation Example of Neural Network 3a]

Next, an implementation example of neural network 3a will be described.

Neural network 3a includes the residual block in each of stacked blocks 111, as described above. Therefore, neural network 3a can be implemented using the network architecture of ResNet including the residual block. Furthermore, since neural network 3a includes connection block 112A or 112B in each of stacked blocks 111, even when neural network 3a is implemented using a network architecture obtained by modifying ResNet to include shallower layers, it is possible to maintain substantially the same accuracy as the accuracy of ResNet.

FIG. 7 is a diagram conceptually illustrating an implementation example of a ResNet10-equivalent network architecture. As illustrated in FIG. 7, in the ResNet10-equivalent network architecture, four building blocks denoted as Building Blockl to Building Block4 are stacked. Each of the building blocks is formed by combining two convolutional layers and the skip connection. Thus, the ResNet10-equivalent network architecture is a network architecture obtained by modifying ResNet disclosed in NPL 1 mentioned above to include shallower layers, and is formed using 10 convolutional layers.

FIG. 8 is a diagram conceptually illustrating an implementation example of neural network 3a according to the present embodiment. Note that neural network 3a illustrated in FIG. 8 is one example of the network architecture hereinbefore referred to as LVNet.

More specifically, neural network 3a illustrated in FIG. 8 has a network architecture in which above-described connection block 112B is added to each of Building Blockl to Building Block4 in the ResNet10-equivalent network architecture illustrated in FIG. 7.

Note that the implementation example of neural network 3a according to the present embodiment is not limited to that illustrated in FIG. 8. Neural network 3a may have a network architecture in which above-described connection block 112B is added to each of the building blocks in ResNet34 or each of the ResNetl8-equivalent building blocks.

Next, the ResNet34 and ResNetl8-equivalent network architectures will be described.

FIG. 9A is a diagram conceptually illustrating an implementation example of the ResNet34 network architecture. As illustrated in FIG. 9A, in ResNet34, four building blocks denoted as Building Block1 to Building Block4 are stacked. Each of the building blocks is formed by combining a plurality of convolutional layers and a plurality of skip connections. Building Blockl includes six convolutional layers, Building Block2 includes eight convolutional layers, Building Block3 includes 12 convolutional layers, and Building Block4 includes six convolutional layers. The skip connection is configured to bypass two convolutional layers. Thus, ResNet34 has a network architecture formed using 34 convolutional layers.

FIG. 9B is a diagram conceptually illustrating an implementation example of the ResNetl8-equivalent network structure. As illustrated in FIG. 9B, in the ResNetl8-equivalent network architecture, four building blocks denoted as Building Blockl to Building Block4 are stacked. Each of the building blocks is formed by combining four convolutional layers and the skip connection that bypasses two convolutional layers. Thus, the ResNetl8-equivalent network architecture is a network architecture obtained by modifying ResNet disclosed in NPL 1 mentioned above to include shallower layers, and is formed using 18 convolutional layers.

[2. Operations of Computation Device 1]

One example of the operations of computation device 1 configured as described above will be described below.

FIG. 10 is a flowchart illustrating the overview of the operations of computation device 1 according to the present embodiment. In FIG. 10, a computation process to be performed by one block 111 included in the plurality of blocks 111 constituting neural network 3a is illustrated.

First, computation device 1 inputs first information as input information to the residual block included in blocks 111 of neural network 3a (S10). More specifically, computation device 1 inputs the first information to the residual block formed by combining one or more first convolutional layers and the skip connection which is a connection that bypasses the one or more first convolutional layers. Note that the first information is input information when block 111 is Building Block1. When block 111 is not Building Block1, the first information is the output of Building Block located immediately before Building Block including block 111.

Next, computation device 1 inputs, to the connection block, a feature volume extracted from the first information by the one or more first convolutional layers of the residual block, and the first information output by the skip connection of the residual block, and causes the connection block to equalize the feature volume extracted from the first information and the first information (S11).

[3. Advantageous Effects, etc.]

In the present embodiment, as a result of adding the connection block to the residual block known in ResNet or the like, it is possible to equalize the output of the residual block by performing dispersed weighting on the output of the residual block, for example, and it is possible to improve non-linearity of the input and output of the residual block. Thus, the required number of blocks for maintaining the accuracy can be reduced, and therefore it is possible to provide a neural network in which the model size and the computational cost are further reduced while the accuracy is maintained.

Furthermore, in the present embodiment, as a result of the connection block further including the shortcut connection, non-linearity of the input and output of the block can be improved, and loss of gradient can be avoided. Accordingly, the required number of blocks for maintaining the accuracy can be reduced, and moreover the shortcut connection makes it possible to avoid gradient explosion at the output of the connection block; thus, it is possible to further reduce the model size and the computational cost while maintaining the accuracy.

Furthermore, the ability to further reduce the model size and the computational cost while maintaining the accuracy produces the advantageous effect of facilitating the use in an embodiment in which the neural network is provided in an integrated circuit and installed on a device body, that is, the use in what is called Edge AI.

For example, in the case where broadcast waves such as television waves are received and the received waves are processed, it is necessary to perform processes with high computational cost such as image recognition. Therefore, in the case where a conventional neural network such as ResNet is used, the conventional neural network is provided in a cloud (what is called cloud AI), and communication via a network such as the Internet becomes necessary. Furthermore, in the case where the conventional neural network is provided in a cloud, there is a broadcast delay due to data traffic or communication for the conventional neural network. In contrast, in the case where the neural network according to the present embodiment such as LVNet is used, the neural network according to the present embodiment, which can further reduce the model size and the computational cost while maintaining the accuracy, is suited to be provided in an integrated circuit and can be installed on a device body. Therefore, with the neural network according to the present embodiment, even when communication via a network such as the Internet is necessary, the data traffic can be reduced, and thus a broadcast delay due to data traffic or communication can be suppressed.

[Example]

The effectiveness of neural network 3a according to the present embodiment to be used in computation device 1 was verified; the result of an experiment will be described as an example.

In the present example, the performance of neural network 3a to be used in computation device 1 was evaluated using two collected experiment data, Test A and Test B.

<Experiment Data>

FIG. 11 is a diagram illustrating the overview of a database according to the present example.

In the database according to the present example, collected images in four categories, namely, Anime, Sports, Music, and Others indicated in FIG. 11, were stored. Note that category "Others" includes categories such as weather, landscape, and talk.

The images stored in the database were generated using one million high-resolution images or more collected using various resources such as YouTube (registered trademark) and Google (registered trademark), for example. Furthermore, the images stored in the database are divided as 96K images serving as training data (Training) and 7K images serving as validation data (Validation).

Test A was made up of images in an image group with less intra-class variance, and Test B was made up of images in an image group with less inter-class variance.

<Conditions of Experiment>

In the present experiment, training of a target neural network was conducted for eight hours using a graphics processing unit (GPU). The training in the present experiment was conducted using the following parameters. Specifically, the learning rate was set to 0.025 and set to be halved for every 10 epochs. Furthermore, the training in the present experiment was conducted with batch gradient descent using a momentum optimizer that was set to 0.9.

<Result of Experiment>

FIG. 12 is a diagram illustrating the result of the experiment according to Example. More specifically, FIG. 12 is a diagram illustrating the result of an experiment in which the accuracy of neural network 3a according to the present embodiment and the accuracy of each of neural networks according to comparative examples were evaluated using Test A and Test B according to the present example. In FIG. 12, the model sizes, the computational cost (model complexities), the parameters, and the memory accesses of the neural networks according to the present embodiment and the comparative examples are also illustrated. Note that the neural networks according to the comparative examples are ResNet34 and ResNetl8. This ResNet34 is ResNet34 illustrated in FIG. 9A, and this ResNetl8 is ResNetl8-equivalent illustrated in FIG. 9B. Neural networks 3a according to the present embodiment are denoted as LR10_CB128 and LR10_CB128_SH. LR10_CB128_SH is LVNet, that is, a model having the network architecture illustrated in FIG. 8. LR10_CB128 is a model having a network architecture obtained by changing connection block 112B in LVNet illustrated in FIG. 8 into connection block 112A illustrated in FIG. 5.

It is clear from FIG. 12 that the neural networks according to the comparative examples, ResNet34 and ResNetl8, and neural networks 3a according to the present embodiment, LR10_CB128 and LR10_CB128_SH, have substantially the same accuracy.

It is also clear from FIG. 12 that the memory size and the computational cost (computational complexities) of neural networks 3a according to the present embodiment are significantly less than the memory size and the computational cost (computational complexities) of the neural networks according to the comparative examples. Furthermore, it is also clear that LR10_CB128_SH, that is, LVNet which is a model having the network architecture illustrated in FIG. 8, exhibits relatively the best performance compared to all the other neural networks. For example, the model size and the computational cost (FLOPs) of LR10_CB128_SH are 8.2% of the model size of ResNetl8 and 6.3% of the computational cost of ResNetl8, respectively. In other words, it is clear that compared to ResNetl8, LR10_CB128_SH is 91.8% less in the model size and 92.2% less in the computational cost (FLOPs).

As described above, according to the present embodiment, it is possible to provide neural network 3a in which the model size and the computational cost are further reduced while the substantially the same accuracy as the accuracy of ResNet is maintained.

[Possibility of Other Embodiments]

The neural network, the computation device, and the computation method according to one embodiment of the present disclosure have been described thus far based on the embodiment, but the present disclosure is not limited to the above-described embodiment. Various modifications to the present embodiment that can be conceived by those skilled in the art, and forms configured by combining structural elements in different embodiments, without departing from the teachings of the present disclosure are included in the scope of the present disclosure. For example, the following cases are also included in the present disclosure.

(1) Some or all of the structural elements included in the above-described computation device is specifically a computer system configured from a microprocessor, a read only memory (ROM), a random access memory (RAM), a hard disk unit, a display unit, a keyboard, and a mouse, for example. A computer program is stored in the RAM or the hard disk unit. Each device achieves its function as a result of the microprocessor operating according to the computer program. Here, the computer program is configured of a combination of command codes indicating commands to the computer in order to achieve a predetermined function.

(2) Some or all of the structural elements included in the above-described computation device may be configured from a single system Large Scale Integration (LSI). A system LSI is a super-multifunction LSI manufactured with a plurality of components integrated on a single chip, and is specifically a computer system configured of a microprocessor, ROM, and RAM, for example. A computer program is stored in the RAM. The system LSI achieves its function as a result of the microprocessor operating according to the computer program.

(3) A portion or all of the structural elements included in the above-described computation device may each be configured from an IC card that is detachably attached to each device or a stand-alone module. The IC card and the module are computer systems configured from a microprocessor, ROM, and RAM, for example. The IC card and the module may include the super-multifunction LSI described above. The IC card and the module achieve their functions as a result of the microprocessor operating according to the computer program. The IC card and the module may be tamperproof.

[Industrial Applicability]

The present disclosure can be used in neural networks, computation methods, and programs, and particularly in a neural network, a computation method, and a program that can demonstrate outstanding performance in visual tasks even when provided in a resource-limited hardware platform.

[Reference Signs List]

| 1 | computation device |
|---|---|
| 2 | inputter |
| 3 | processor |
| 3a | neural network |
| 4 | outputter |
| 10 | input layer |
| 11 | middle layer |
| 12, 1122 | output layer |
| 111, 111B | block |
| 112, 112A, 112B | connection block |
| 113, 1125 | adder |
| 1111, 1112, 1121, 1126 | convolutional layer |
| 1123 | weight |
| 1124 | weighting layer |

**Claims**

1. A neural network, comprising:

an input layer to which input information is input;
a plurality of blocks to be used to extract a feature volume from the input information; and
an output layer from which the feature volume extracted is output, wherein
each of the plurality of blocks includes:

a residual block formed by combining one or more first convolutional layers and a skip connection which
is a connection that bypasses the one or more first convolutional layers; and
a connection block which includes at least a second convolutional layer and equalizes output of the one or
more first convolutional layers and output of the skip connection.

2. The neural network according to claim 1, wherein
the connection block includes:

a second convolutional layer to which the output of the one or more first convolutional layers and the output of
the skip connection are input;
a first output layer to which output of the second convolutional layer is input;
a weighting layer which adds a weight stored in advance to output of the first output layer; and
a third convolutional layer to which output of the weighting layer is input.

3. The neural network according to claim 1, wherein

each of the plurality of blocks further outputs the output of the skip connection in addition to output of the
connection block, and
the connection block includes:

a second convolutional layer to which the output of the one or more first convolutional layers and the output
of the skip connection are input;
a first output layer to which output of the second convolutional layer is input;
a weighting layer which adds a weight stored in advance to output of the first output layer;
a shortcut connection which skips the first output layer and the weighting layer; and
a third convolutional layer to which output of the weighting layer and output of the shortcut connection are
input.

4. The neural network according to claim 2 or 3, wherein
the first output layer outputs a value obtained by applying a softmax function to the output of the second convolutional
layer input to the first output layer.

5. A method for computing a plurality of blocks that are included in a neural network and used to extract a feature volume from input information, the neural network including an input layer to which the input information is input, the plurality of blocks, and an output layer from which the feature volume extracted is output, the method comprising:

inputting first information to a residual block included in the plurality of blocks and formed by combining one or more first convolutional layers and a skip connection which is a connection that bypasses the one or more first convolutional layers; and

inputting a feature volume extracted from the first information by the one or more first convolutional layers and the first information output by the skip connection to a connection block included in the plurality of blocks and including at least a second convolutional layer, to equalize the feature volume in the first information and the first information.

6. A program for performing a method for computing a plurality of blocks that are included in a neural network and used to extract a feature volume from input information, the neural network including an input layer to which the input information is input, the plurality of blocks, and an output layer from which the feature volume extracted is output, the program causing a computer to execute:

inputting first information to a residual block included in the plurality of blocks and formed by combining one or more first convolutional layers and a skip connection which is a connection that bypasses the one or more first convolutional layers; and

inputting a feature volume extracted from the first information by the one or more first convolutional layers and the first information output by the skip connection to a connection block included in the plurality of blocks and including at least a second convolutional layer, to equalize the feature volume in the first information and the first information.

EP 4 053 747 A1

## FIG. 1

# FIG. 2

# FIG. 3

# FIG. 4A

# FIG. 4B

$b_{(i-1)} X b_{(i-1)} K b_{(n-1)}$

$CONV_{(i-1)}$

$n^{(k-1)}_{(i-1)}$

$X^{(k-1)}_{(i-1)}$

CONV-BN

$X^k_i$

$w_{(i-1)} X w_{(i-1)} X w_{(n-1)}$

$w_i X w_i X w_n$

# FIG. 4C

# FIG. 5

# FIG. 6

111B

Residual block

1111 conv

1112 conv

Skip connection

1121 conv$_{(CB)}$

1123 Weights$_{(CB)}$

1122 softmax

1124 $\times$

112B

1125 $+$

Shortcut connection

1126 conv$_{(CB)}$

Connection block

113 $+$

# FIG. 7

ResNet10-equivalent

```
          ┌─────────────────────┐
          │   7x7 CONV.64, /2    │
          └─────────────────────┘
                  pool. /2                  Skip connection

Building   ┌─────────────────────┐
Block 1    │    3x3 CONV. 64     │
           │    3x3 CONV. 64     │
           └─────────────────────┘          Skip connection

Building   ┌─────────────────────┐
Block 2    │   3x3 CONV. 128,/2  │
           │    3x3 CONV.128     │
           └─────────────────────┘

Building   ┌─────────────────────┐
Block 3    │   3x3 CONV. 256, /2 │
           │    3x3 CONV.256     │
           └─────────────────────┘

Building   ┌─────────────────────┐
Block 4    │   3x3 CONV. 512, /2 │
           │    3x3 CONV.512     │
           └─────────────────────┘
                  avg pool
          ┌─────────────────────┐
          │       fc 1000       │
          └─────────────────────┘
```

# FIG. 8

3a

Skip connection

7x7  CONV. 64, /2

pool. /2

Shortcut connection

**Building Block 1**

CONV — 1111

CONV — 1112

CONV(CB)

softmax

Weights (CB)

1123

CONV(CB) — 1126

CB

112B

Skip connection

**Building Block 2**

CONV — 1111

CONV — 1112

CONV(CB)

softmax

Weights (CB)

1123

CONV(CB) — 1126

CB

112B

Shortcut connection

Skip connection

**Building Block 3**

CONV — 1111

CONV — 1112

CONV(CB)

softmax

Weights (CB)

1123

CONV(CB) — 1126

CB

112B

**Building Block 4**

CONV — 1111

CONV — 1112

CONV(CB)

softmax

Weights (CB)

1123

CONV(CB) — 1126

CB

112B

avg pool

fc 1000

# FIG. 9A

ResNet34

| 7x7 CONV. 64 /2 |
| pool /2 |

Building Block 1
- 3x3 CONV. 64
- 3x3 CONV. 64
- 3x3 CONV. 64
- 3x3 CONV. 64
- 3x3 CONV. 64
- 3x3 CONV. 64

Building Block 2
- 7x7 CONV. 128 /2
- 3x3 CONV. 128
- 3x3 CONV. 128
- 3x3 CONV. 128
- 3x3 CONV. 128
- 3x3 CONV. 128
- 3x3 CONV. 128
- 3x3 CONV. 128

Building Block 3
- 3z3 CONV. 256 /2
- 3x3 CONV. 256
- 3x3 CONV. 256
- 3x3 CONV. 256
- 3x3 CONV. 256
- 3x3 CONV. 256
- 3x3 CONV. 256
- 3x3 CONV. 256
- 3x3 CONV. 256
- 3x3 CONV. 256
- 3x3 CONV. 256
- 3x3 CONV. 256

Building Block 4
- 3z3 CONV. 512 /2
- 3x3 CONV. 512
- 3x3 CONV. 512
- 3x3 CONV. 512
- 3x3 CONV. 512
- 3x3 CONV. 512

avg pool

| fc 1000 |

# FIG. 9B

ResNet18-equivalent

# FIG. 10

```
        ( Start )
            |
            v
┌────────────────────────────────────────┐
│  Input first information to residual block │──S10
└────────────────────────────────────────┘
            |
            v
┌────────────────────────────────────────┐
│ Input, to connection block, feature volume in first information │──S11
│  extracted by one or more first convolutional layers of residual │
│  block and first information output by skip connection of residual │
│  block, and cause connection block to equalize feature volume in │
│       first information and first information      │
└────────────────────────────────────────┘
            |
            v
         ( End )
```

# FIG. 11

| Categories | Training | Validation | Test A | Test B |
|---|---|---|---|---|
| Anime | 12233 | 909 | 0 | 216 |
| Sports | 33051 | 2477 | 827 | 977 |
| Music | 26942 | 2022 | 621 | 717 |
| Others | 24622 | 1842 | 700 | 445 |

FIG. 12

EP 4 053 747 A1

| Name | Test A | Test B | Size (MB) | FLOPs (M) | Parameter (M) | Memory access (MB) |
|---|---|---|---|---|---|---|
| | % | % | MegaBytes | Million | Million | MegaBytes |
| ResNet34** | 92 | 85 | 31.7 | 7355.4 | 21.29 | 81.21 |
| ResNet18 | 93.9 | 87.9 | 44.8 | 3655.4 | 11.18 | 42.65 |
| LR10_CB128** | 92.08 | 87.13 | 2.3 | 293 | 1.11 | 4.25 |
| LR10_CB128_SH* | 93.67 | 86.61 | 3.8 | 233.4 | 0.94 | 3.57 |

**INTERNATIONAL SEARCH REPORT**

| International application No. |
| --- |
| PCT/JP2020/040591 |

A. CLASSIFICATION OF SUBJECT MATTER
G06N3/04(2006.01)i
FI: G06N3/04

According to International Patent Classification (IPC) or to both national classification and IPC

B. FIELDS SEARCHED

Minimum documentation searched (classification system followed by classification symbols)
G06N3/04

Documentation searched other than minimum documentation to the extent that such documents are included in the fields searched
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | US 2019/0311249 A1 (MECVII (BEIJING) TECIINOLOCY CO., LTD.) 10 October 2019 (2019-10-10) entire text, all drawings | 1–6 |
| A | JP 2019-105899 A (NATIONAL INSTITUTE OF INFORMATION AND COMMUNICATIONS TECHNOLOGY) 27 June 2019 (2019-06-27) entire text, all drawings | 1–6 |

☐ Further documents are listed in the continuation of Box C.　　☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 18 December 2020 (18.12.2020) | 28 December 2020 (28.12.2020) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

International application No.

PCT/JP2020/040591

| Patent Documents referred in the Report | Publication Date | Patent Family | Publication Date |
|---|---|---|---|
| US 2019/0311249 A1 | 10 Oct. 2019 | CN 108875904 A entire text, all drawings | |
| JP 2019-105899 A | 27 Jun. 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HE, K. ; ZHANG, X. ; REN, S. ; SUN, J.** Deep residual learning for image recognition. *Proceedings of the IEEE conference on computer vision and pattern recognition,* 2016, 770-778